(19) Europäisches Patentamt
European Patent Office
Office européen des brevets

(11) Publication number: **0 107 346**
**A2**

# (12) EUROPEAN PATENT APPLICATION

(21) Application number: 83305625.2

(22) Date of filing: 22.09.83

(51) Int. Cl.³: C 10 L 1/32

(30) Priority: 22.10.82 GB 8230222

(43) Date of publication of application: 02.05.84 Bulletin 84/18

(84) Designated Contracting States: BE DE FR GB IT NL SE

(71) Applicant: IMPERIAL CHEMICAL INDUSTRIES PLC, Imperial Chemical House Millbank, London SW1P 3JF (GB)

(72) Inventor: Hancock, Roger Ian, 9 Bentinck Road Fairfield, Stockton-on-Tees Cleveland (GB)
Inventor: Bognolo, Guido, Schuttershof 2, B-3078 Everberg (BE)

(74) Representative: Jones, Martin et al, Imperial Chemical Industries PLC Legal Department: Patents Po Box 6, Welwyn Garden City Herts, AL7 1HD (GB)

(54) **Combustible compositions based on coal, oil and water stabilised with surfactants, and methods for their preparation.**

(57) Combustible compositions consist of pulverised coal, water, a hydrocarbon fuel oil and a stabilising agent which is obtained by reaction of an alkylphenol-formaldehyde condensation product with ethylene oxide and optionally also propylene oxide, and methods of making compositions.

EP 0 107 346 A2

0107346

E. 32476/EP.

COMBUSTIBLE COMPOSITIONS BASED ON COAL, OIL AND WATER STABILISED WITH SURFACTANTS, AND METHODS FOR THEIR PREPARATION

This invention relates to stabilised mixtures of pulverised coal, water and fuel oil, more particularly to such mixtures which are stabilised by means of specified agents, which are valuable as aids towards achieving the optimum utilisation of coal.

With the increasing cost and anticipated eventual scarcity of crude oil and its refined products, renewed emphasis is being placed on the use of coal as a fuel. The physical form of coal, however, places severe limitations on its

direct use if this is to be done in an efficient and environmentally acceptable manner, and consequently several techniques are currently being explored whereby these limitations may be overcome or minimised. Mention may be made, for example, of coal gasification processes and the reduction of the coal to finaly divided form in suspension in oil, methanol or water. Although it is a way of extending rather than replacing oil, the preparation of coal-water-oil mixtures is the subject of much study ; these offer a number of advantages over the use of dry pulverised coal, particularly in respect of ease of handling and transportation.

An important factor in the production of useful coal-water-oil mixtures is the control of sedimentation of the coal particles on subsequent storage of the mixtures. This may involve either reducing the degree to which sedimentation occurs, or ensuring that such sediment as does form is of a soft and readily redispersible consistency, or achieving both of these objectives at the same time. For these purposes, it is necessary to incorporate in the mixtures a stabilising additive.

We have found that certain reaction products of alkylene oxides with alkylphenol-formaldehyde condensates are especially valuable as stabilising additives for coal-water-oil mixtures.

According to the present invention we provide a combustible composition consisting of a stabilised mixture of pulverised coal, water and a hydrocarbon fuel oil, the composition comprising

(i) from 10 to 75 parts by weight of pulverised coal,

(ii) from 0.1 to 20 parts by weight of water,

(iii) from 0.001 to 3.0 parts by weight of a stabilising additive which is the product of reaction of an alkylphenol - formaldehyde condensate of the general formula.

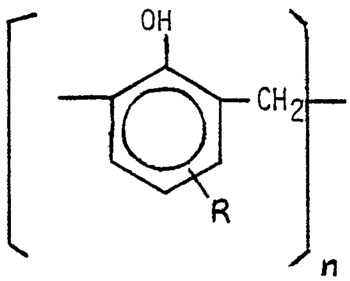

(I)

where R is hydrogen or an alkyl group having from 5 to 22 carbon atoms and n is an integer from 2 to 10, with from 10 to 1000 molar proportions of at least one alkylene oxide selected from ethylene oxide and propylene oxide, and

(iv) sufficient of a hydrocarbon fuel oil to bring the total composition weight to 100 parts.

Preferably, in formula (I), the group R is a straight or branched chain alkyl group containing from 5 to 20 carbon atoms, more preferably from 6 to 12 carbon atoms. Preferably, n has a value in the range 3 to 6.

Suitable alkylphenol-formaldehyde condensates conforming to the formula (I), from which the stabilising additives may be derived, include the condensates from, for example, the alkylphenols where the group R is hexyl, octyl, nonyl or dodecyl, and where n lies in the range 3 to 6.

These alkylphenol-formaldehyde condensates may be reacted with either ethylene oxide alone or with both ethylene oxide and propylene oxide , in the latter case, the condensate is reacted first with the propylene oxide and subsequently ith the ethylene oxide so as to produce a poly(oxypropylene)-poly(oxyethylene) block copolymer derivative. Preferred stabilising additives are, however, those obtained by reacting the condensate with from 10 to 100 molar proportions of ethylene oxide only.

The proportion of the stabilising additive used preferably lies in the range 0.01 part to 1.0 part per 100 parts by weight of the total composition ; most preferably, it lies in the range 0.03 part to 0.6 part.

The pulverised coal for incorporation in the compositions of the invention may be obtained by techniques already well known, such as by the use of tumbling mills or ball mills with recirculation of the ground material until the derived particle size distribution is obtained.

The particle size of the coal is not critical for the purposes of the invention, but the preferred grade is that in which at least 80% of the particles are of a size below 75 microns.

As already stated, the coal content of the compositions may vary between 10 parts and 75 parts by weight out of a total composition weight of 100 parts ; more typically, it will lie in the range 30 to 55 parts by weight.

The water content of the compositions is preferably in the range 1 to 10 parts, most preferably in the range 1.5 to 6 parts, per 100 parts by weight of the total composition.

Hydrocarbon fuel oils suitable for incorporation in the compositions include heavy fuel oils of viscosity in the range 160 to 400 centistokes at 50° C, such as Fuel No. 6 (American nomenclature) or Fuel No. 2 (European nomenclature), embracing distillation residues from crude oil refining processes.

The preferred method of preparing the compositions of the invention comprises the following steps :

(i) pre-heating of all the ingredients to a temperature in the range 50 to 70° C, preferably about 60° C ;

(ii) dissolution or dispersion of the stabilising additive in the water ;

(iii) addition of the resulting aqueous phase to the oil, followed by high speed mixing (e g for a period of 1 minute ;

(iv) addition of the pulverised coal, followed by further high speed mixing (e g for a period of 5 minutes).

Compositions according to the invention, as compared with those incorporating known types of stabilising additive, exhibit a reduced tendency for sedimentation of the coal particles coupled with the formation of soft and easily redispersible sediments. In addition, the viscosities of the compositions are significantly lower than those of analogous coal-water-oil mixtures from which the stabilising additive is omitted. They are therefore very suitable for use as fuels in process heaters and in industrial and other types of boiler.

The invention is illustrated by the following Example, in which parts are by weight :

## EXAMPLE I

General procedure

The water, oil and stabilising additive, in the amounts indicated, are first all pre-heated to about 60° C. The additive is then dispersed or solubilised in the water and the blend is then added to the fuel oil, after which the mixture is subjected to the action of a high-shear mixer for about 1 minute. The requisite amount of pulverised coal is then added and high-speed mixing continued for about 5 minutes. The coal sample used had the following characteristics :

| | | |
|---|---|---|
| moisture content | 3 - 4 | % W/W |
| volatile matter | 30 - 35 | % W/W |
| ash content | 12 - 16 | % W/W |
| gross calorific value | 6350 - 6359 | k cal/kg |

Particle Size Distribution :

| Size range (μ) | % within range |
|---|---|
| 113 - 84.3 | 8.1 |
| 84.3 - 64.6 | 14.4 |
| 64.6 - 50.2 | 12.3 |
| 50.2 - 39.0 | 12.5 |
| 39.0 - 30.3 | 9.8 |
| 30.3 - 23.7 | 8.0 |
| 23.7 - 18.5 | 8.5 |
| 18.5 - 14.5 | 6.2 |
| 14.5 - 11.4 | 5.2 |
| 11.4 - 9.1 | 4.3 |
| 9.1 - 7.2 | 3.3 |
| 7.2 - 5.8 | 4.5 |

For comparison, the procedure was repeated in the absence of the stabilising additive and also, in certain instances, in the absence of both the stabilising additive and the water.

Following the preparation of each coal-water-oil mixture, it was stored at 60° C for a stated period. The amount of the sediment which had formed was then measured, and its consistency assessed, by the following procedure.

By means of an Instron machine model 1195 a steel rod (0.5 cm diameter, flat penetrating edge) is made to penetrate in a sample of the test coal / water / oil mixture (about 300 gms contained in a 6 cm diameter, 25 cm length cylinder) at constant speed of 2 cm/min.

The test sample is placed over a 50 kg Instron cell having resolution inferior to 1 gram. The penetration of the rod in the test mixture results in a resistance force which is measured by the cell and recorded in the form of curves giving resistance force in function of penetration depth.

The percentage sediments volume is determined as the ratio between the total sample depth (B) and the depth (A) at which a change in consistency of the test sample is detected by a change in the slope of the recorded curves, according to the formula

$$\text{Volume \% sediment} = \frac{A}{B} \times 100$$

The sediment consistency is determined as the force recorded when the rod edge has attained a position 0.5 cm above the sample bottom.

The lower the percentage volume of coal sediments found, the more unstable is the mixture, a figure of 100% corresponding to the freshly-made mixture (i.e.no sediment).

The lower the penetration force recorded, the lower is the sediment consistency and hence the more readily can the sediment be re-dispersed when required.

The following mixtures A - D were prepared according to the above general procedure

| Ingredient | | Parts by Weight Mixture A | Mixture B | Mixture C | Mixture D |
|---|---|---|---|---|---|
| Pulverised coal | | 50 | 50 | 50 | 50 |
| Water | | 2 | 2 | 2 | - |
| Additive A | * | 0.05 | - | - | - |
| Additive B | ** | | 0.05 | - | - |
| Oil | *** | balance to 100 | | | |

* Additive A was the reaction product of an octylphenolformaldehyde condensate of molecular weight 910 with 21 molar proportions of ethylene oxide.

** Additive B was the reaction product of an octylphenolformaldehyde condensate of molecular weight 910 with 48 molar proportions of ethylene oxide.

*** The fuel oil used had a Brookfield viscosity of 120 cps at 60° C.

The results of the sediment volume and consistency determinations, after 21 days and 28 days storage of the mixtures respectively, were as follows :

| | Mixt A 21d | 28d | Mixt B 21d | 28d | Mixt C 21d | 28d | Mixt D 21d | 28d |
|---|---|---|---|---|---|---|---|---|
| Volume % of coal sediment | 85 | 82 | 90 | 89 | 70 | 68 | 82 | 81 |
| Penetration force (gms) | 49 | 88 | 78 | 185 | 96 | 1600 | 405 | 1350 |

It will be seen from the results from mixtures A and B, as compared with those from mixtures C and D, that very low concentrations of the stabilising additives are sufficient to produce significant improvements in the volume and the consistency of the sediments deposited by the mixtures on storage, particularly in the case of the longer periods of 28 days.

There were also determined, for mixtures A, C and D, the Brookfield viscosities (spindle RV No 6) at 60° C one hour after the preparation of the mixtures. The results obtained were as follows :

| Rotation speed | Experimental Viscosities | | |
|---|---|---|---|
| (rpm) | Mixture A | Mixture C | Mixture D |
| 0.5 | 96000 | 122000 | 36000 |
| 1.0 | 79000 | 94000 | 34000 |
| 2.5 | 58400 | 67200 | 32400 |
| 5.0 | 46200 | 53800 | 27600 |
| 10.0 | 36200 | 40500 | 23500 |
| 20.0 | 28100 | 32600 | 18700 |
| 50.0 | - | - | 13600 |

From a comparison of the results for mixtures A and C, which were analogous except for the presence and absence of the stabilising additive respectively, it will be seen that the incorporation of the additive brings about some reduction in the viscosities. The results for mixture D show that simple coal-oil mixtures, containing neither water nor stabilising additive, have even lower viscosities; but the corresponding sedimentation data given above show that such mixtures give rise to very dense sediments.

## EXAMPLE 2

In order to show the superior properties of ethoxylated alkylphenol formaldehyde condensates compared with ethoxylated alkylphenols mixtures E-F were prepared according to the above procedure.

| Ingredient | Mixture E | Mixture F | Mixture G |
|---|---|---|---|
| | (Parts by weight) | | |
| Pulverised coal | 50 | 50 | 50 |
| Water | 2 | 2 | 2 |
| Additive E | 0.05 | | |
| Additive F | | 0.05 | |
| Additive G | | | 0.05 |
| Oil | 47.95 | 47.95 | 47.95 |

Additive E was an nonylphenol formaldehyde condensate reacted with an average of 150 molar proportions of ethylene oxide.
Additive F was prepared by ethoxylating nonylphenol with an average of 20 molar proportions of ethylene oxide.
Additive G was prepared by ethoxylating nonylphenol with an average of 30 molar proportions of ethylene oxide.

Sediment volumes and consistency determinations after 15 days and 28 days storage of the compositions were as follows:-

| | Mixture E | | Mixture F | | Mixture G | |
|---|---|---|---|---|---|---|
| | 15d | 28d | 15d | 28d | 15d | 28d |
| Volume% of coal sediment | 100 | 100 | 89 | 85 | 83 | 82 |
| Penetration force (g) | 10 | 10 | 12 | 200 | 6 | 235 |

Mixture E shows a better performance than either of mixtures F or G. Comparison of mixtures A and F, having similar levels of ethoxylation, shows that the latter is more likely to give difficulties in dispersion after 1 month standing than when an alkylphenol formaldehyde condensate is used.

COMBUSTIBLE COMPOSITIONS BASED ON COAL, OIL AND WATER STABILISED WITH SURFACTANTS, AND METHODS FOR THEIR PREPARATION

CLAIMS

1. A combustible composition comprising pulverised coal, water and a hydrocarbon fuel oil said composition being stabilised with a surfactant in which there is present

(i) from 10 to 75 parts by weight of pulverised coal,
(ii) from 0.1 to 20 parts by weight of water,
(iii) from 0.001 to 3.0 parts by weight of a stabilising additive, and
(iv) sufficient of a hydrocarbon fuel oil to bring the total composition weight to 100 parts, characterised in that

the stabilising additive is the product of reaction of an alkylphenol-formaldehyde condensate of the general formula:-

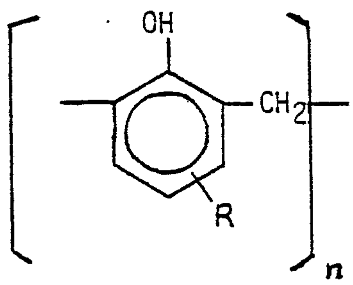

(where R is hydrogen or an alkyl group having from 5 to 22 carbon atoms and n is an integer from 2 to 10) with from 10 to 1000 molar proportions of at least one alkylene oxide selected from ethylene oxide and propylene oxide.

2. A composition according to claim 1 in which the condensate has been formed by reaction first with propylene oxide and subsequently with ethylene oxide.

3. A composition according to claim 1 in which the condensate has been formed by reaction with from 10 to 100 molar proportions of ethylene oxide.

4. A composition according to any one of claims 1 to 3 in which, in the pulverised coal, at least 90% of the particles are of size below 75 microns.

5. A composition according to any one of claims 1 to 4 in which the hydrocarbon fuel oil is a heavy fuel oil of viscosity in the range 160 to 400 centistokes at 50°C.

6. A method of preparing a composition according to any one of the previous claims comprising the steps of:-

(i) preheating the ingredients to a temperature in the range 50 to 70°C,

(ii) dissolving or dispersing the stabilising additive in water,

(iii) adding the resultant aqueous phase to the oil, followed by mixing,

(iv) adding the pulverised coal, followed by further mixing.